# EUROPEAN PATENT APPLICATION

(11) **EP 4 365 812 A1**
(43) Date of publication of application: **08.05.2024**
(21) Application number: 22832597.3
(22) Date of filing: 27.04.2022
(51) Int. Cl.: G06Q 50/06, G06Q 50/16

(54) **INFORMATION PROCESSING SYSTEM**

(30) Priority: 28.06.2021 JP 2021106593
(71) Applicant: Daikin Industries, Ltd., Osaka-Shi, Osaka 530-0001 (JP)
(72) Inventor: NAKAGAWA, Yoshihiro, Osaka-Shi, Osaka 530-0001 (JP)
(74) Representative: Hoffmann Eitle
(86) International application number: PCT/JP2022/019090
(87) International publication number: WO 2023/276437

(57) **Abstract**

[Object] To make it possible to, when a target value in demand control is changed, acquire and store information on the target value and provide the information as necessary.

[Solution] An information processing system performs setting related to demand control of an equipment appliance, and includes: a storage unit 120 that stores a demand target value in the demand control; and a history information generation unit 160 that acquires information on the demand target value input by a user. The storage unit 120 further stores a change history of the demand target value based on the information on the demand target value acquired by the history information generation unit 160.

## Description

### Technical Field

The present disclosure relates to an information processing system.

### Background Art

PTL 1 describes a demand target value changing device that periodically changes a demand target value used in a demand monitoring system by determining whether to change the demand target value using a demand target value change rule, which is a rule for determining whether to change the demand target value, and generating a command to change the demand target value when the determination result indicates that the demand target value should be changed.

### Citation List

### Patent Literature

PTL 1: Japanese Unexamined Patent Application Publication No. 2016-127688

### Summary of Invention

### Technical Problem

When a trouble occurs due to a change in a target value of demand control, such as a maximum demand value exceeding contract power to result in a penalty (increase in a basic rate) and the health of a user of an equipment appliance is compromised by extreme operation control such as strong suppression operation on the equipment appliance, a failure to obtain the information on the change in the target value leads to difficulty in taking appropriate measures because where the responsibility lies is unknown.

An object of the present disclosure is to make it possible to, when a target value in demand control is changed, acquire and store information on the target value and provide the information as necessary.

### Solution to Problem

An information processing system of the present disclosure performs setting related to demand control of an equipment appliance, and includes: a storage unit that stores a demand target value in the demand control; and an acquisition unit that acquires information on the demand target value input by a user, wherein the storage unit further stores a change history of the demand target value based on the information on the demand target value acquired by the acquisition unit.

With this configuration, when the target value in the demand control is changed, information on the target value can be stored as the change history and provided as necessary.

The acquisition unit may be configured to acquire, as the information on the demand target value, information on a timing at which the demand target value is changed.

With this configuration, when the target value in the demand control is changed, the information on the timing at which the demand target value is changed can be stored and provided as necessary.

The acquisition unit may be configured to acquire information identifying a user who has changed the demand target value as the information on the demand target value.

With this configuration, when the target value in the demand control is changed, the information identifying the user who has changed the demand target value can be stored and provided as necessary.

Further, the information identifying the user who has changed the demand target value may be information identified by an authentication action performed by the user to log in to a system for receiving an input of the information on the demand target value.

With this configuration, the demand target value can be automatically acquired without additionally requesting the input of the information on the user who has changed the demand target value.

The acquisition unit may be configured to acquire information indicating a reason for a change in the demand target value as the information on the demand target value.

With this configuration, when the target value in the demand control is changed, the information indicating the reason for the change in the demand target value can be stored and provided as necessary.

The acquisition unit may be configured to acquire, as the information on the demand target value, information on a device used by the user to input the demand target value.

With this configuration, when the target value in the demand control is changed, the information on the device used to input the demand target value can be stored and provided as necessary.

The demand target value may be set for each equipment appliance that is a power consumption control target, and the acquisition unit may be configured to acquire an input related to the demand target value set for each equipment appliance that is the control target.

With this configuration, the information on the demand target value can be stored and provided as necessary individually for each equipment appliance that is the control target.

Further, the demand target value may be set in a contract unit of electric power, and the acquisition unit may be configured to acquire an input related to the demand target value set in the contract unit.

With this configuration, the information on the demand target value for each consumer who is a contract target can be stored and provided as necessary.

A notification unit that notifies a manager of the information on the demand target value acquired by the acquisition unit may be further provided.

With this configuration, it is possible to notify the manager of a change in the target value in the demand control, and to prompt the manager to take measures.

### Brief Description of Drawings

[Fig. 1] Fig. 1 is a diagram illustrating an overall configuration of a control system for an equipment appliance, to which the present embodiment is applied.
[Fig. 2] Fig. 2 is a diagram illustrating a configuration of a server.
[Fig. 3] Fig. 3 is a diagram illustrating a configuration of a control device.
[Fig. 4] Fig. 4 is a diagram illustrating a hardware configuration example of the control device and the server.
[Fig. 5] Fig. 5 is a diagram illustrating a configuration of the equipment appliance.
[Fig. 6] Fig. 6 is a diagram illustrating a configuration example of history information on a change in target power.
[Fig. 7] Fig. 7 is a flowchart illustrating an operation in which the control device generates the history information on a change in target power.
[Fig. 8] Fig. 8 is a flowchart illustrating an operation in which the control device issues a notification of the information on a change in target power.

### Description of Embodiments

An embodiment will be described below in detail with reference to the accompanying drawings.

### <System configuration>

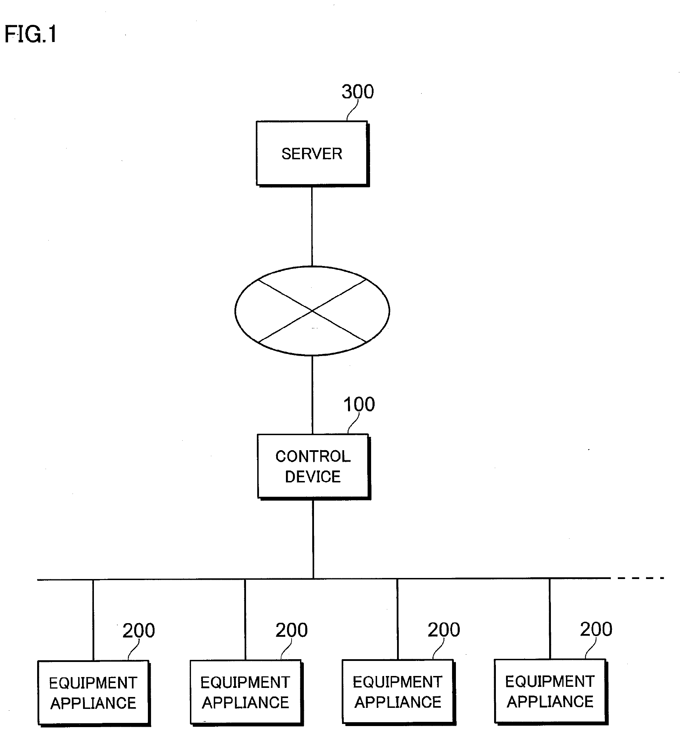

Fig. 1 is a diagram illustrating an overall configuration of a control system for an equipment appliance, to which the present embodiment is applied. The control system of the present embodiment includes a control device 100, equipment appliances 200 which are controlled apparatuses, and a server 300. The control device 100 and the equipment appliances 200 are connected through a network. The network may be a local area network (LAN) based on a dedicated line, a wide area network (WAN), a virtual private network (VPN) set on the Internet, or the like.

The equipment appliance 200 is equipment/appliance that operates using power. The control device 100 controls the operation of one or a plurality of equipment appliances 200. Fig. 1 illustrates a configuration example in which the control device 100 controls a plurality of equipment appliances 200. The equipment appliance 200 may be any type of equipment/appliance as long as the equipment/appliance operates using power and the operation is controlled by the control device 100. In the following description, an example in which the control system of the present embodiment is applied to control on an air conditioner as a specific example of the equipment appliance 200 may be described.

Further, the equipment appliance 200 is provided with a control unit that controls the equipment appliance 200 in accordance with an instruction from the control device 100. The control device 100 generates an instruction (hereafter, referred to as a "control instruction") for controlling the equipment appliance 200 which is a control target, and transmits the generated control instruction to each equipment appliance 200. Each equipment appliance 200 acquires the control instruction from the control device 100, and then the control unit of the equipment appliance 200 performs the setting of the equipment appliance 200 and controls the operation in accordance with the acquired control instruction.

The control device 100 and the server 300 are connected through a network. In the configuration example illustrated in Fig. 1, one control device 100 connected to the server 300 is illustrated, but a plurality of control devices 100 are actually connected to the server 300. One or a plurality of equipment appliances 200 are connected to each control device 100. As the network connecting the control device 100 and the server 300, the Internet is used, for example. Alternatively, a LAN or a WAN may be used.

### <Relationship between electricity charge and control on equipment appliance 200>

Here, the electricity charge will be described. The electricity charge is determined for each month mainly by a basic rate and a power rate. The basic rate is calculated based on a basic rate unit price and contract power. The contract power is the maximum value of the maximum demand power (demand value) within one year from the current month. The maximum demand power is the maximum value of the average power consumption in each time period (demand time period: 30 minutes) in a month. The average power consumption is an average value of the demanded power (power consumption) in each time period. The power rate is calculated based on the power rate unit price and the monthly power consumption amount.

As described above, the contract power is the maximum value of the maximum demand power within the past year. Therefore, when the maximum demand power in a certain month (in other words, the average power consumption in a certain time period in the month) reaches the contract power, even if the maximum demand power lower than the contract power is continuously maintained after the month, the basic rate based on the contract power is charged for a year. When the average power consumption in a certain time period exceeds the value of the contract power at that point and reaches the maximum demand power of the month including the time period, the average power consumption (maximum demand power) in this time period is used as the new contract power for the calculation of the basic rate thereafter.

The power rate unit price is set in various ways. The power rate unit price may be set to vary based on a predetermined condition. For example, the power rate unit price may be set to vary depending on the time zone of a day, whether the day is a weekday or a holiday, the season, or the like. In addition, there is a case where power is traded in a market, and the power rate unit price may be set to vary to reflect a trade price of the power in the market.

The equipment appliance 200 may be controlled in such a manner to reduce the electricity charge required for the operation of the equipment appliance 200. In this case, the equipment appliance 200 is required to be controlled such that the average power consumption does not exceed the current contract power. When the power rate unit price varies, higher efficiency in terms of reduction of the electricity charge can be achieved in a case where the power consumption is reduced in a time zone in which the unit price is high, compared with a case where the power consumption is reduced in a time zone in which the unit price is low. Still, while the power rate unit price affects only the power rate for each time period, the contract power affects the electricity charge over a year from the current month. Therefore, priority is given to the control in consideration of the average power consumption over the control in consideration of the variation in the power rate unit price. The control performed to prevent the average power consumption from exceeding the current contract power is referred to as demand control.

The electricity charge is charged to a consumer who is a contractor of power supply. The consumer has one or a plurality of equipment appliances 200. The control device 100 controls the equipment appliance 200 of one or a plurality of consumers. The control device 100 performs control on the equipment appliance 200 of each consumer in consideration of the average power consumption in each time period and the power rate unit price according to the electricity charge (basic rate and power rate) set for each consumer. The specific content of the control on the equipment appliance 200 by the control device 100 will be described below.

### <Configuration of server 300>

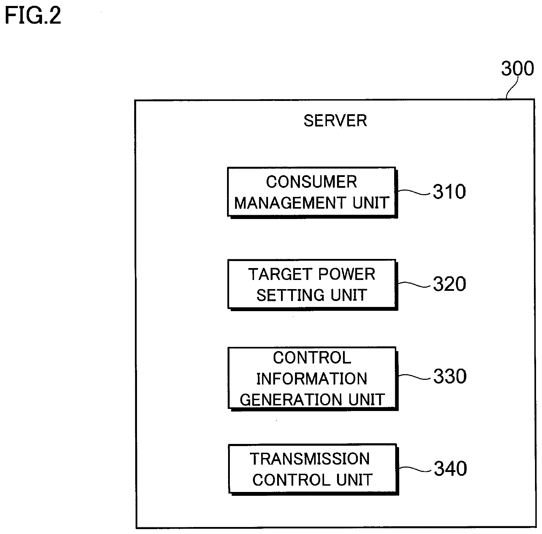

Fig. 2 is a diagram illustrating a configuration of the server 300. The server 300 is implemented as, for example, a server (what is known as a cloud server) or the like established on a network cloud environment. The server 300 includes a consumer management unit 310, a target power setting unit 320, a control information generation unit 330, and a transmission control unit 340.

The consumer management unit 310 manages consumer information. The consumer information includes, for example, information such as contract power, maximum demand power, and average power consumption in each time period for each consumer. The information on the average power consumption of each consumer is obtained from, for example, the control device 100 that controls the equipment appliances 200 of each consumer.

The target power setting unit 320 sets a demand target value (hereafter, referred to as "target power") that is a target value of average power consumption by the equipment appliance 200 of each consumer in each time period. When the average power consumption by the consumer consuming power exceeds the contract power, this average power consumption is set as the new contract power, and the basic rate in the electricity charge increases. Thus, the target power based on the contract power is set, and the average power consumption in each time period is controlled so as not to exceed the target power. The target power is set to a value equal to or less than the contract power, for example, a value lower than the contract power by a certain value.

The target power setting unit 320 predicts the average power consumption by the equipment appliance 200 of each consumer in each time period, and sets the target power for the average power consumption by each consumer in each time period based on the prediction result. The average power consumption can be predicted by various existing prediction methods. For example, the environmental information and the operation information on the equipment appliance 200 and the power consumption record may be accumulated, and the average power consumption may be predicted from the anticipated environment and operation state of the equipment appliance 200 in a future time period. Information such as the environmental information, the operation information, and the power consumption record of the equipment appliance 200 may be collected in each equipment appliance 200 and acquired via the control device 100, for example.

The control information generation unit 330 generates control information for controlling the equipment appliance 200 of each consumer. The control information is information for causing the control device 100 to control the equipment appliance 200 such that the average power consumption by the equipment appliance 200 of the consumer in each time period does not exceed the target power of the consumer set by the target power setting unit 320 for the time period. Before a time period in which the control based on each control information starts, the control information generation unit 330 generates the control information for the time period.

The transmission control unit 340 transmits the control information generated by the control information generation unit 330 to the control device 100 that controls the equipment appliance 200 of the consumer corresponding to each control information. Before a time period in which the control based on each control information starts, the transmission control unit 340 transmits the control information for the time period to the control device 100. When transmitting the control information for each time period to the control device 100, the transmission control unit 340 may transmit the control information for reducing the average power consumption from that in the time period immediately before the time period that is the target of the transmission, before transmitting the control information for increasing the average power consumption from that in the time period immediately before the time period that is the target of the transmission.

### <Configuration of control device 100>

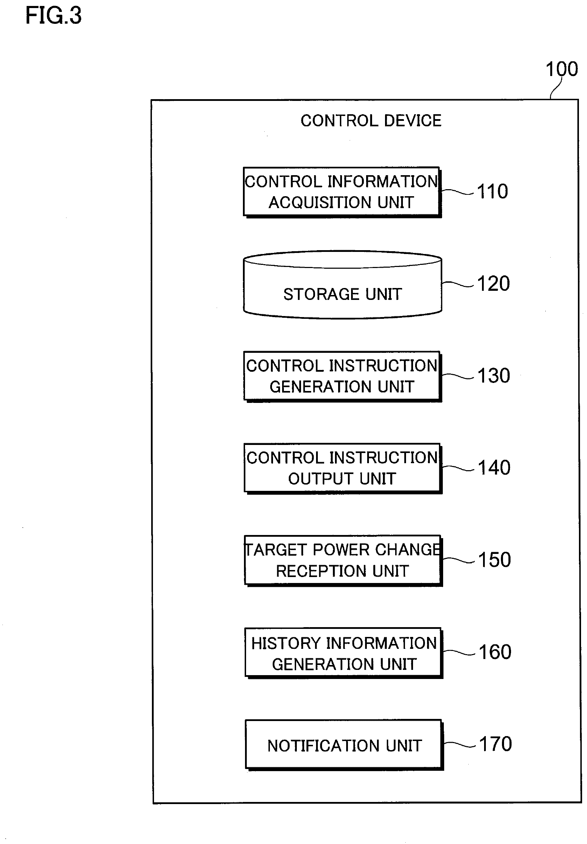

Fig. 3 is a diagram illustrating a configuration of the control device 100. The control device 100 is implemented as an information processing device connected to the server 300 and the equipment appliances 200 through a network. The control device 100 may be a device (for example, an edge server) provided in the vicinity of the equipment appliance 200 which is a control target, or may be a server (cloud server) established on a cloud environment. The control device 100 includes a control information acquisition unit 110, a storage unit 120, a control instruction generation unit 130, a control instruction output unit 140, a target power change reception unit 150, a history information generation unit 160, and a notification unit 170.

The control information acquisition unit 110 acquires control information on the equipment appliance 200 from the server 300. The control information includes information on the target power of the average power consumption set for each consumer. Before the control based on the control information for each time period is performed on the equipment appliance 200, the control information acquisition unit 110 acquires the control information for the corresponding time period.

The storage unit 120 stores the control information acquired by the control information acquisition unit 110. The control information acquired by the control information acquisition unit 110 is used to control the equipment appliance 200. The control information is stored in the storage unit 120 before the time period for which the control based on the control information is performed starts. As will be described in detail below, when the target power included in the control information is changed, history information (change history) regarding the change in the target power is stored in the storage unit 120.

The control instruction generation unit 130 generates a control instruction for controlling the equipment appliance 200 based on the control information acquired by the control information acquisition unit 110. The control instruction generation unit 130 generates a control instruction for operating the equipment appliance 200 while preventing the average power consumption by the equipment appliance 200 of each consumer in each time period from exceeding the target power set for the consumer for each time period. When one consumer has a plurality of equipment appliances 200, the control instruction is generated for each time period to prevent the total value of the average power consumptions by all the equipment appliances 200 of the one consumer from exceeding the target power of the corresponding time period. In this case, how the consumer allocates the power to the plurality of his or her equipment appliances 200 to prevent the target power from being exceeded is not particularly limited. For example, the power may be equally allocated according to the type of the equipment appliance 200, the scale of the apparatus, or the like. In addition, sufficient power may be allocated to a certain equipment appliance 200, and the remaining power may be allocated to other equipment appliances 200. Alternatively, in a certain time period, some of the equipment appliances 200 may not be operated, and the power may be consumed only by rest of the equipment appliances 200. The control instruction generation unit 130 may generate the control instruction in consideration of the operation information on the equipment appliance 200.

The control instruction output unit 140 reads the control instruction for each time period generated by the control instruction generation unit 130 based on the control information acquired by the control information acquisition unit 110, from the storage unit 120, and transmits the control instruction to the equipment appliance 200 that is the control target of each control instruction, when the time period for which the control based on the control information is performed starts.

The target power change reception unit 150 receives a change input of the target power included in the control information. The change input of the target power is an example of the input of information on the target power (demand target value) by the user. The target power is changed, with a time period to be changed identified. The target power change reception unit 150 receives, for example, an instruction from a user who has logged in to the system of the control device 100, and causes a display device to display an operation screen for inputting a change in the target power. Then, the target power change reception unit 150 receives a target power change operation performed by the user on the operation screen. The instruction to display the operation screen and the operation to change the target power are performed, for example, by the user operating an input device such as an input keyboard or a pointing device. When the operation to change the target power is performed, the target power change reception unit 150 reflects the content of the change in the corresponding control information.

When the target power change reception unit 150 receives a change in the target power, the history information generation unit 160 generates history information on the change in the target power. The history information generation unit 160 acquires the information received by the target power change reception unit 150 and the information on the change content and the change operation of the target power, and records the acquired information in the history information. The history information generation unit 160 is an example of an acquisition unit. The information on the change operation includes, for example, information such as the date and time and the time period corresponding to the target power for which the change has been made, the user who has made the change, the terminal device used to make the change, and the change reason. The information on the date and time and the time period is an example of the information on timing, and is obtained from, for example, the control information including the target power to be changed. The information on the user who has made the change is an example of the information for identifying the user, and is obtained from, for example, authentication information input by an authentication action performed by the user logging in to the system of the control device 100 or the like. The information on the terminal device used to make the change is an example of the information on the device used for the input, and is obtained from, for example, a terminal code input for the login to the system of the control device 100 when terminal authentication is performed for the login or the like. The information on the change reason is an example of the information indicating the reason for the change, and is obtained, for example, through a request for the input of the reason for the change in the change operation of the target power. The generated history information is stored in the storage unit 120.

The notification unit 170 notifies the manager of the demand control of the information on the change in the target power, under a predetermined notification condition. The notification unit 170 is an example of a notification unit. The information on the change in the target power to be notified may be information simply indicating that the target power has been changed, or may be history information generated by the history information generation unit 160. Notification information including part of the information recorded in the history information may be generated. The notification may be performed at any time when the target power is changed or when the history information is generated, or a configuration may be adopted in which the generation status of the history information is checked once in every certain period, and if there is new history information, the information on the change in the target power related to the history information is collectively notified.

In a case where the server 300 described above predicts the average power consumption based on the information on the equipment appliance 200, the control device 100 may be configured to acquire the operation information from the equipment appliance 200 when controlling the equipment appliance 200. The operation information acquired by the control device 100 broadly includes various types of information on the operation of the equipment appliances 200. For example, information indicating an operation state such as an operation rate or a continuous operation time of the equipment appliance 200 may be included. In addition, various types of information expected to have an influence on the operation of the equipment appliance 200, such as a time zone in which the equipment appliance 200 is operated and whether the equipment appliance 200 is operated on weekdays or on holidays, may be included. In addition, the control device 100 may acquire information on the environment in which the equipment appliances 200 are installed, such as temperature and humidity, which can be used to predict the average power consumption. These pieces of information can be acquired by various existing methods depending on the type of information. For example, the information may be directly acquired from the equipment appliance 200, or may be acquired from various sensor devices or the like. The date and time information is obtained by, for example, a clock function or a calendar function of the control device 100. The acquired operation information on the equipment appliance 200 is held in the storage unit 120 and is transmitted to the server 300 at a predetermined timing. For example, the information may be transmitted in response to a request from the server 300 or may be periodically transmitted at a predetermined time of a day or the like.

### <Hardware configuration of control device 100 and server 300>

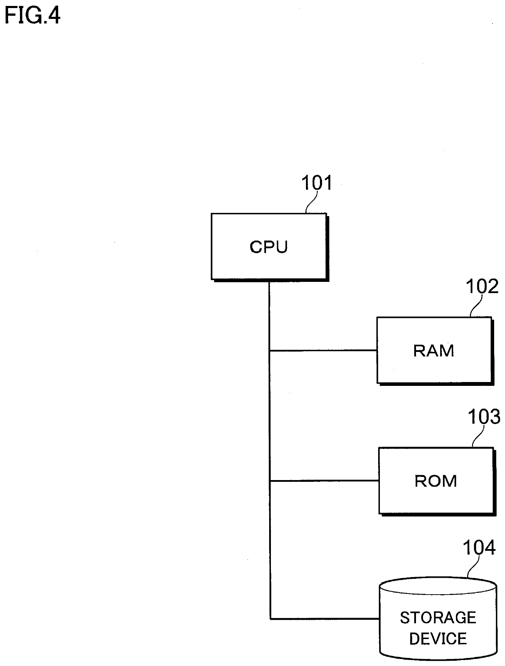

Fig. 4 is a diagram illustrating a hardware configuration example of the control device 100 and the server 300. The control device 100 and the server 300 are implemented by, for example, a computer. Even when the control device 100 and the server 300 are implemented as servers established in a cloud environment, system resources of a physical computer on a network as illustrated in Fig. 4 are used for configuring the control device 100 and the server 300 as a virtual system.

A computer that implements the control device 100 includes a central processing unit (CPU) 101 that is an arithmetic unit, and a random access memory (RAM) 102, a read only memory (ROM) 103, and a storage device 104 that are storage units. The RAM 102 is a main storage device (main memory) and is used as a working memory when the CPU 101 executes calculation processing. The ROM 103 stores programs and data such as a set value prepared in advance, and the CPU 101 can execute processing by directly reading the program and the data from the ROM 103. The storage device 104 is a unit for storing programs and data. The storage device 104 stores a program, and the CPU 101 loads the program stored in the storage device 104 onto the main storage device and executes the program. In addition, a result of processing by the CPU 101 is stored and held in the storage device 104. For example, a magnetic disk device, a solid state drive (SSD), or the like is used as the storage device 104.

When the control device 100 is implemented by the computer illustrated in Fig. 4, each of the functions of the control information acquisition unit 110, the control instruction generation unit 130, the control instruction output unit 140, the target power change reception unit 150, the history information generation unit 160, and the notification unit 170 described with reference to Fig. 3 is implemented by, for example, the CPU 101 executing a program. The storage unit 120 is implemented by, for example, the RAM 102 or the storage device 104. A computer as the control device 100 may be connected to the display device that displays the operation screen when the user inputs a change in the target power and the input device with which the user performs an input operation. When the server 300 is implemented by the computer illustrated in Fig. 4, each of the functions of the consumer management unit 310, the target power setting unit 320, the control information generation unit 330, and the transmission control unit 340 described with reference to Fig. 2 is implemented by, for example, the CPU 101 executing a program. The configuration example illustrated in Fig. 4 is merely an example of a case where the control device 100 is implemented by a computer.

### <Configuration of equipment appliance 200>

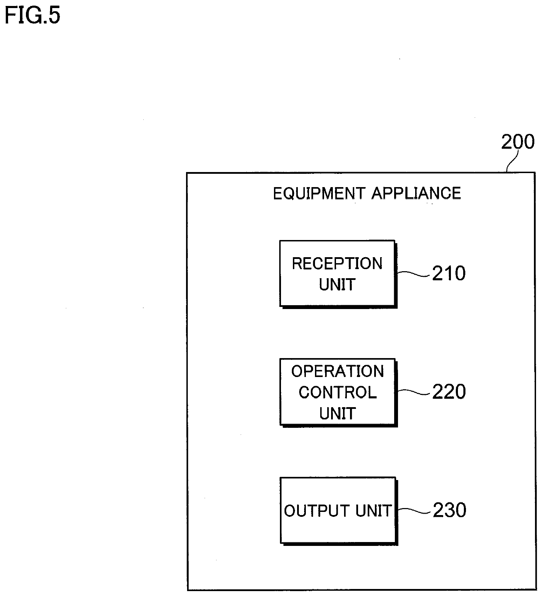

Fig. 5 is a diagram illustrating a configuration of the equipment appliance 200. The equipment appliance 200 includes a reception unit 210, an operation control unit 220, and an output unit 230. The equipment appliance 200 includes mechanisms and devices that operate to implement the functions of the equipment appliance 200 in accordance with the type of the equipment appliance 200. For example, when the equipment appliance 200 is an air conditioner, the equipment appliance 200 includes an indoor unit, an outdoor unit, and the like. When the equipment appliance 200 is lighting equipment, the equipment appliance 200 includes a lighting fixture, a control switch, and the like. The types and modes of such mechanisms and the like vary depending on the type of the equipment appliance 200, and therefore are not illustrated.

The reception unit 210 receives the control instruction output from the control device 100 through a network using a network interface (not illustrated).

The operation control unit 220 controls an operation of a mechanism or a device provided in the equipment appliance 200 based on the control instruction received by the reception unit 210. Specifically, for example, when the equipment appliance 200 is an air conditioner, the reception unit 210 receives information designating a set temperature as the control instruction, and the operation control unit 220 controls the operation of the indoor unit and the outdoor unit so that the received set temperature is achieved. While the example of the control related to the temperature setting is described herein, the control by the operation control unit 220 based on the control instruction can be applied to various types of control (such as, for example, control of humidity or a gas component) related to gas that can be controlled by the air conditioner. Further, also for various equipment appliances 200 other than the air conditioner, the operation control unit 220 executes control corresponding to the type of the equipment appliance 200 according to the control instruction received from the control device 100.

The output unit 230 outputs information on the operation state of the equipment appliance 200 to the control device 100 through a network by using a network interface (not illustrated).

The reception unit 210, the operation control unit 220, and the output unit 230 are implemented by, for example, a computer. The computer implementing the operation control unit 220 may have the configuration described with reference to Fig. 4. In this case, each of the functions of the reception unit 210, the operation control unit 220, and the output unit 230 is implemented by, for example, the CPU 101 illustrated in Fig. 4 executing a program. Alternatively, each of the functions of the reception unit 210, the operation control unit 220, and the output unit 230 may be implemented by dedicated hardware. For example, the functions may be implemented by an application specific integrated circuit (ASIC), a field-programmable gate array (FPGA), or other circuits. Furthermore, the reception unit 210, the operation control unit 220, and the output unit 230 may be implemented as a combination of a function implemented by the CPU 101 executing a program (software) and a function implemented by dedicated hardware.

### <Reception of change in target power>

As described above, in the present embodiment, the control device 100 receives a change operation by the user for the target power included in the control information provided from the server 300. The demand control is control for suppressing the power supplied to the equipment appliance 200 while considering the degree of influence on the environment, to prevent the average power consumption in each time period from exceeding the target power. Therefore, there is a tradeoff between the limitation on the demand control and the comfort and convenience of the user of the equipment appliance 200. In view of this, in the present embodiment, the target power designated by the control information is allowed to be changed, when the change is particularly necessary for individual reasons. Furthermore, in order to clarify where the responsibility related to the change in the target power lies, history information on the change in the target power is acquired and stored.

In the present embodiment, the target power in the demand control is determined based on an agreement with the consumer based on the record of the maximum demand power for the past year. Therefore, a change in the target power can be regarded as reviewing the target power determined in advance on the basis of the agreement, in accordance with the reason that has arisen due to the subsequent operation.

An example of the reason for a change in the target power includes, for example, a large variation in weather from the condition in a certain period in the past (for example, the past one year). Specifically, there may be cases such as a case where the target power is increased in response to an extremely hot climate or severe winter compared to the past weather or a case where conversely the target power is decreased in response to cold summer or warm winter compared to the past weather.

Further examples of the reason for a change in the target power includes, for example, a change in mode of use of a facility (a location including the equipment appliance 200) by a consumer, rendering a change in the target power according to a demand based on the new mode of use necessary. Specifically, there may be cases such as a case where the target power is increased in response to an increase in the use of the facility leading to an increase in the demand for the equipment appliance 200 such as an air conditioner or a case where conversely the target power is decreased in response to a decrease in the demand for the equipment appliance 200 such as an air conditioner due to the closing of the facility or a reduction in services.

Another example of the reason for a change in the target power includes, for example, an increase in the target power in response to a request from the user of the facility due to a mismatch between the target power and the actual usage situation of the facility. A possible specific example of the mismatch between the target power and the actual usage situation of the facility includes unexpected intensive use of the facility due to an unplanned event being held or the like, leading to a concern that the environment inside the facility will be compromised if the equipment appliance 200 is operated within the range of the initial target power, and the like.

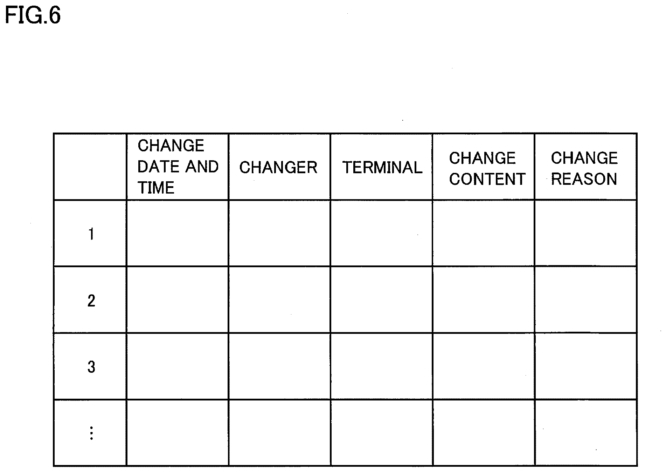

Fig. 6 is a diagram illustrating a configuration example of history information on a change in the target power. In the control device 100, when the target power acquired from the server 300 and stored in the storage unit 120 is changed, the history information generation unit 160 generates history information on a change in the target power and stores the history information in the storage unit 120. In the example illustrated in Fig. 6, information of each of the items "change date and time", "changer", "terminal", "change content", and "change reason" is recorded as the history information.

The "change date and time" is information identifying the date and time when the change operation is performed for the target power and the control on the equipment appliance 200 based on the changed target power is activated in the control device 100. For example, date and time data such as "xx:xx, date, month, year" is recorded. The date and time data is acquired from, for example, a clock function or a calendar function incorporated in the control device 100.

The "changer" is information identifying a user who has changed the target power. An authority to change the target power may be given to limit the user who can perform the change operation. Examples of possible users to be given the authority to change the target power include an owner of the facility, a manager of the facility, a staff member who is given the authority by the manager, and the like. Information identifying the user may be acquired in various ways. For example, the information may be requested and acquired when the change operation is received, or may be extracted from the authentication information input when the user logs in to the system of the control device 100. As the information identifying the user, for example, a user ID or the like registered for managing the authority to change the target power may be used.

The "terminal" is information for identifying a terminal device used to change the target power. As the terminal device with which the change operation for the target power can be performed, an information device such as a personal computer or a smartphone may be used, or an input device of the control device 100, a dedicated terminal, or the like may be used. Information identifying the terminal device may be acquired in various ways. For example, the information may be requested and acquired when the change operation is received, or may be acquired by performing terminal authentication at the time of login to the system of the control device 100 or the like. As the information identifying the terminal device, for example, a terminal ID or a terminal code registered for connection to the control device 100, a fixed IP address, or the like may be used.

The "change content" is information indicating the content of the change in the target power. Specifically, the value of the target power after the change is recorded. Further, a configuration may be adopted in which a relative value (difference) with respect to the value of the target power before the change may be recorded as the change content. Information on the change content is acquired through, for example, an input in the change operation for the target power.

The "change reason" is information indicating the reason for changing the target power. The change reason is input, for example, through text input when the change operation is received. Further, a configuration may be adopted in which selection items regarding the change reason prepared in advance are presented by a menu display or the like, and the selection made by the user is received.

While the example of the history information is described above, the history information illustrated in Fig. 6 is merely an example, and items other than those described above may be provided, and all of the items described above are not necessarily provided. For example, if there is the information identifying the changer, the information identifying the terminal device may be omitted. In addition, all the prepared items are not necessarily essential input items. For example, the information on the change date and time and the changer, which can be acquired from the system of the control device 100 or the login information, may be set as essential items, and information such as the change reason for receiving an input by the user may be set as an item that may not be input.

### <Operation of control device regarding change in target power>

Next, the operation of the control device 100 regarding a change in the target power will be described. Hereinafter, the operation of the control device 100 will be described by dividing the operation into an operation of generating history information when the target power is changed and an operation of notifying the manager that the target power has been changed.

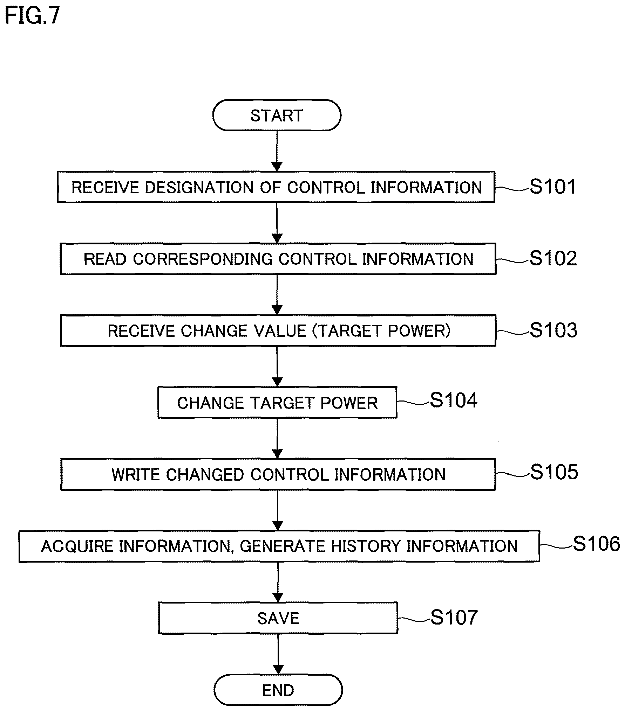

Fig. 7 is a flowchart illustrating an operation in which the control device 100 generates the history information on a change in the target power. In advance, a user having the authority to change the target power logs in to the system of the control device 100, and is in a state of being able to perform a change operation of the target power. For example, in a case where the user interface is provided by an operation screen displayed on a display device, it is assumed that an operation screen for changing the target power is displayed on a terminal device used by the user to perform a change operation of the target power.

First, the user designates control information for the equipment appliance 200 and the time period for which the target power is to be changed. When the designation of the control information is received (S101), the control device 100 reads the corresponding control information from the storage unit 120 (S 102). As described above, in a case where the user interface is provided by the operation screen displayed on the display device, the control device 100 displays the read control information on the operation screen.

Next, the user inputs a change value of the target power. The control device 100 receives the input of the change value (S 103), and changes the target power in the control information read in S 102 (S104). Then, the control device 100 writes the control information in which the target power has been changed to the storage unit 120 (S105). Thus, the update of the control information is completed.

Next, the control device 100 collects information necessary for creating history information, creates history information (S 106), and stores the history information in the storage unit 120 (S107). The necessary information is collected from an input when the user logs in to the system of the control device 100, an input when designating the control information, a change value of the target power, and the like. Further, part of the information such as the change reason is input and received on an operation screen for input displayed, to be collected.

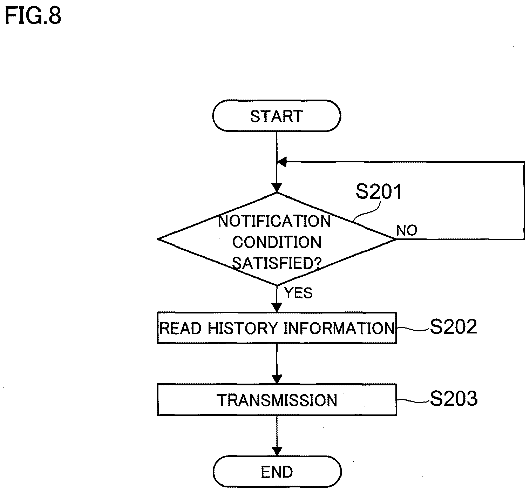

Fig. 8 is a flowchart illustrating an operation in which the control device 100 issues a notification of the information on a change in the target power. When the target power in the control information is changed, the history information is generated and stored as described above, and the manager of the demand control is notified of the information on the change in the target power. Examples of a condition for the notification may include update of the control information with the change in the target power, generation of the history information, and the like. In addition, a configuration may be adopted in which whether the control information is updated or the history information is newly generated is periodically checked, and a notification is issued when there is the updated control information or the newly generated history information. The notification may be a notification simply indicating that the target power has been changed, or the newly generated history information may be transmitted as the notification. In the former case, for example, the manager who has received the notification accesses the control device 100 and checks the history information. In the example illustrated in Fig. 8, it is assumed that the history information is transmitted as the notification.

When the predetermined notification condition is satisfied, the control device 100 reads the history information stored in the storage unit 120 (S201, S202). Then, the control device 100 transmits the read history information to the manager of the demand control (S203). The history information read from the storage unit 120 and issued as the notification is history information corresponding to a notification target identified based on the notification condition. For example, when the notification condition is the generation of the history information, the latest history information is issued as the notification. When the notification is periodically issued, all pieces of the history information generated after the previous notification are issued as the notification.

While the embodiment is described above, the technical scope of the present disclosure is not limited to the above-described embodiment. For example, in the above-described embodiment, a configuration is adopted in which a change in the target power included in the control information held in the control device 100 is received, but a configuration may be adopted in which the target power in the control information generated in the server 300 is changed. In this case, the user who changes the target power accesses the server 300 and performs a change operation of the target power. Therefore, a user who can change the target power is a person who has an authority to access the server 300. The history information generated in response to a change in the target power is stored in a storage unit (not illustrated) of the server 300. The server 300 transmits a notification to the manager, for notifying the manager of the change in the target power. When the server 300 receives the change in the target power, in principle, the change is performed before the control information is transmitted to the control device 100. However, a configuration may also be adopted in which when the target power is changed after the control information is transmitted to the control device 100, control information including the changed target power may be generated and transmitted to the target control device 100 to instruct the control device 100 to update the control information.

In the above-described embodiment, a change in the target power set for the consumer who is a contractor of power supply is received. Alternatively, when the demand target value for each of the plurality of equipment appliances 200 of the consumer allocated with the target power of each consumer is set in the control device 100, the change in the demand target value may be received for each of the equipment appliances 200. In this case, after the target power of the consumer is changed, the demand target value can be directly changed in units of individual equipment appliances 200, instead of allocating the changed target power to each equipment appliance 200 again. Furthermore, the present disclosure includes various modifications and configuration substitutions that do not depart from the scope of the technical idea of the present disclosure.

The embodiment described above can be understood as follows. An information processing system of the present disclosure performs setting related to demand control of an equipment appliance, and includes: the storage unit 120 that stores a demand target value in the demand control; and the history information generation unit 160 that acquires information on the demand target value input by a user, wherein the storage unit 120 further stores a change history of the demand target value based on the information on the demand target value acquired by the history information generation unit 160.

With this configuration, when the target value in the demand control is changed, information on the target value can be stored as the change history and provided as necessary.

The history information generation unit 160 may be configured to acquire, as the information on the demand target value, information on a timing at which the demand target value is changed.

With this configuration, when the target value in the demand control is changed, the information on the timing at which the demand target value is changed can be stored and provided as necessary.

The history information generation unit 160 may be configured to acquire information identifying a user who has changed the demand target value as the information on the demand target value.

With this configuration, when the target value in the demand control is changed, the information identifying the user who has changed the demand target value can be stored and provided as necessary.

Further, the information identifying the user who has changed the demand target value may be information identified by an authentication action performed by the user to log in to a system for receiving an input of the information on the demand target value.

With this configuration, the demand target value can be automatically acquired without additionally requesting the input of the information on the user who has changed the demand target value.

The history information generation unit 160 may be configured to acquire information indicating a reason for a change in the demand target value as the information on the demand target value.

With this configuration, when the target value in the demand control is changed, the information indicating the reason for the change in the demand target value can be stored and provided as necessary.

The history information generation unit 160 may be configured to acquire, as the information on the demand target value, information on a device used by the user to input the demand target value.

With this configuration, when the target value in the demand control is changed, the information on the device used to input the demand target value can be stored and provided as necessary.

The demand target value may be set for each equipment appliance that is a power consumption control target, and the history information generation unit 160 may be configured to acquire an input related to the demand target value set for each equipment appliance that is the control target.

With this configuration, the information on the demand target value can be stored and provided as necessary individually for each equipment appliance that is the control target.

Further, the demand target value may be set in a contract unit of electric power, and the history information generation unit 160 may be configured to acquire an input related to the demand target value set in the contract unit.

With this configuration, the information on the demand target value for each consumer who is a contract target can be stored and provided as necessary.

The notification unit 170 that notifies a manager of the information on the demand target value acquired by the history information generation unit 160 may be further provided.

With this configuration, it is possible to notify the manager of a change in the target value in the demand control, and to prompt the manager to take measures.

### Reference Signs List

100 control device, 110 control information acquisition unit, 120 storage unit, 130 control instruction generation unit, 140 control instruction output unit, 150 target power change reception unit, 160 history information generation unit, 170 notification unit, 200 equipment appliance, 210 reception unit, 220 operation control unit, 230 output unit, 300 server, 310 consumer management unit, 320 target power setting unit, 330 control information generation unit, 340 transmission control unit

## Claims

1. An information processing system for performing setting related to demand control of an equipment appliance, the information processing system comprising:
a storage unit that stores a demand target value in the demand control; and
an acquisition unit that acquires information on the demand target value input by a user, wherein
the storage unit further stores a change history of the demand target value based on the information on the demand target value acquired by the acquisition unit.

2. The information processing system according to claim 1, wherein the acquisition unit acquires, as the information on the demand target value, information on a timing at which the demand target value is changed.

3. The information processing system according to claim 1, wherein the acquisition unit acquires information identifying a user who has changed the demand target value as the information on the demand target value.

4. The information processing system according to claim 3, wherein the information identifying the user who has changed the demand target value is information identified by an authentication action performed by the user to log in to a system for receiving an input of the information on the demand target value.

5. The information processing system according to claim 1, wherein the acquisition unit acquires information indicating a reason for a change in the demand target value as the information on the demand target value.

6. The information processing system according to claim 1, wherein the acquisition unit acquires, as the information on the demand target value, information on a device used by the user to input the demand target value.

7. The information processing system according to claim 1, wherein the demand target value is set for each equipment appliance that is a power consumption control target, and
the acquisition unit acquires an input related to the demand target value set for each equipment appliance that is the control target.

8. The information processing system according to claim 1, wherein the demand target value is set in a contract unit of electric power, and
the acquisition unit acquires an input related to the demand target value set in the contract unit.

9. The information processing system according to any one of claims 1 to 8 further comprising a notification unit that notifies a manager of the information on the demand target value acquired by the acquisition unit.
